# EUROPÄISCHE PATENTSCHRIFT

(11) **EP 1 500 173 B1**
(45) Veröffentlichungstag und Bekanntmachung des Hinweises auf die Patenterteilung: **21.06.2006**
(21) Anmeldenummer: 03725105.5
(22) Anmeldetag: 25.04.2003
(51) Int. Cl.: H01S 3/06, H01S 3/042

(54) **LASERSTRAHLQUELLE MIT EINEM EINE DÜNNE KRISTALLSCHEIBE ALS LASERAKTIVES MEDIUM ENTHALTENDEN LASERELEMENT**
LASER BEAM SOURCE WITH A LASER ELEMENT CONTAINING A THIN CRYSTAL DISK AS A LASER ACTIVE MEDIUM
SOURCE DE RAYONNEMENT LASER POURVUE D'UN ELEMENT LASER CONTENANT UN MINCE DISQUE DE CRISTAL SERVANT DE MILIEU ACTIF DU LASER

(30) Priorität: 27.04.2002 DE 10219004
(43) Veröffentlichungstag der Anmeldung: 26.01.2005
(73) Patentinhaber: Rofin-Sinar Laser GmbH, 22133 Hamburg (DE)
(72) Erfinder: LUDEWIGT, Klaus, 22113 Oststeinbeck (DE)
(74) Vertreter: Mörtel & Höfner
(86) Internationale Anmeldenummer: PCT/EP2003/004372
(87) Internationale Veröffentlichungsnummer: WO 2003/094312

(56) Entgegenhaltungen:
- WO-A-01/15290
- DE-A- 10 142 005
- US-A- 6 160 824
- US-B1- 6 347 109
- PATENT ABSTRACTS OF JAPAN Bd. 2000, Nr. 06, 22. September 2000 (2000-09-22) & JP 2000 077750 A (HAMAMATSU PHOTONICS KK), 14. März 2000 (2000-03-14) in der Anmeldung erwähnt

## Beschreibung

Die Erfindung bezieht sich auf eine Laserstrahlquelle mit einem eine dünne Kristallscheibe als laseraktives Medium enthaltenden Laserelement.

Eine solche Laserstrahlquelle ist beispielsweise aus der US-Patentschrift 5,553,088 A bekannt. Eine solche Laserstrahlquelle, die in der Literatur auch als Scheibenlaser bezeichnet wird, enthält als laseraktives Medium eine dünne, nur wenige Zehntelmillimeter bis wenige Millimeter dicke und typisch einen Durchmesser im Größenordnungsbereich von etwa 10 mm aufweisende Kristallscheibe, die auf einer Flachseite mit einer reflektierenden Schicht und auf der gegenüberliegenden Flachseite mit einer antireflektierenden Schicht versehen ist. Das auf diese Weise gebildete scheibenförmige Laserelement ist auf einem massiven, aus Kupfer bestehenden Kühlkörper angeordnet, wobei die mit der reflektierenden Schicht versehene Oberfläche dem Kühlkörper zugewandt ist.

In die Kristallscheibe wird das zum Erzeugen einer Besetzungsinversion erforderliche Pumplicht entweder an der Schmalseite oder der dem Kühlkörper gegenüberliegenden Stirnseite eingekoppelt. Zur effizienteren Ausnutzung des seitlich eingekoppelten Pumplichtes wird in der JP 2000-77750 A vorgeschlagen, die Kristallscheibe zwischen zwei transparenten Schichten anzuordnen, deren Brechungsindex geringfügig niedriger ist als der Brechungsindex der Kristallscheibe, um durch Totalreflexion an den Grenzflächen eine effizientere Ausnutzung des Pumplichts zu erzielen.

Zur Verbindung des Laserelements mit dem Kühlkörper wird eine weiche Zwischenschicht, beispielsweise Indium In, eingefügt, die die thermischen Verformungen des Kristalls im Laserbetrieb aufnehmen kann. Die in der Kristallscheibe entstehende Wärme fließt über die duktile Zwischenschicht in den massiven Kühlkörper. Dieser wird von einem Kühlfluid, in der Regel Wasser, durchströmt, wodurch die Wärme abtransportiert wird.

Der bekannte Aufbau weist jedoch eine Reihe von Nachteilen auf. Durch die Verwendung einer duktilen Zwischenschicht zwischen dem Kühlkörper und dem Laserelement wird der Wärmeübergangswiderstand auch bei idealem großflächigen Kontakt erhöht. Der Wärmeübergangswiderstand hängt außerdem empfindlich von der Qualität des Kontaktes zwischen dem Laserelement und dem Kühlkörper ab, so dass ein hoher fertigungstechnischer Aufwand betrieben werden muss, um eine ausreichende Reproduzierbarkeit des thermischen Kontaktes zu erzielen. Dies wird dadurch erschwert, dass die Kristallscheibe und somit auch das aus Kristallscheibe und dünnen Funktionsschichten gebildete Laserelement sehr dünn und zerbrechlich ist und allenfalls am Rand mit moderaten Kräften fixiert werden kann. Dies führt bei hoher thermischer Belastung zu erheblichen Problemen. Ist das Laserelement in radialer Richtung mit zu großem Spiel fixiert, beginnt es auf der duktilen Zwischenschicht zu gleiten. Bei zu kleinem Spiel lassen sich thermisch verursachte Verformungen des Laserelements bzw. der Kristallscheibe nicht vermeiden, die dazu führen können, dass der Kühlkontakt infolge einer Aufwölbung der Scheibe teilweise abreißt und in diesen Zonen eine deutliche Verschlechterung der Wärmeabfuhr auftritt.

Aus der DE 199 39 774 C2 ist ein Scheibenlaser bekannt, bei dem die Kristallscheibe ein Wandelement einer das Kühlfluid aufnehmenden Kühlkammer bildet, so dass eine ihrer Flachseiten unmittelbar oder nur durch dünne Funktionsschichten (Spiegelschicht, Schutzschicht) getrennt in thermischem Kontakt mit dem Kühlfluid steht. Es wird also nicht zunächst die Wärme auf einen massiven Kühlkörper abgeführt, der seinerseits von einem Kühlfluid gekühlt wird, sondern es erfolgt ein direkter Wärmeübergang auf das Kühlfluid. Dadurch sind ein minimaler Wärmeübergangswiderstand und eine effiziente Kühlung gewährleistet. Zur Erhöhung der Stabilität ist auf der der Kühlkammer abgewandten Seite der Kristallscheibe ein optisch transparenter Stützkörper angeordnet. Durch diese Maßnahme wird eine Verformung der Kristallscheibe vermieden, die ohne Stützkörper durch die Druckdifferenz verursacht werden würde, die zwischen der Kühlkammer und dem Außenraum aufgrund des vom Kühlfluid ausgeübten Druckes entsteht. Ebenso werden Schwingungen der Kristallscheibe unterdrückt und insbesondere bei direkt auf die Kristallscheibe zuströmendem Kühlmittel deren Zerbrechen bei zu hohem Staudruck vermieden. Die Verwendung eines Stützkörpers ist insbesondere von Vorteil bei sehr geringer Dicke der Kristallscheiben, beispielsweise kleiner als 300µm, wie sie in Hochleistungslasern eingesetzt werden.

Um eine möglichst hohe Leistung extrahieren zu können, müssen Hochleistungsscheibenlaser beim Betrieb hoch belastet werden, so dass es bei hohen mechanischer Spannungen trotz des Stützkörpers auch dann zu einem Bruch kommen kann, wenn die theoretisch mögliche mechanische Belastungsgrenze noch nicht erreicht ist.

Der Erfindung liegt nun die Aufgabe zu Grunde, eine Laserstrahlquelle mit einem eine dünnen Kristallscheibe als laseraktives Medium enthaltenden Laserelement anzugeben, dessen mechanische Belastbarkeit bei zugleich guter Kühlbarkeit gegenüber dem bekannten Aufbau weiter erhöht ist.

Die Aufgabe wird gemäß der Erfindung gelöst mit einer Laserstrahlquelle mit den Merkmalen des Patentanspruches 1.

Durch die Anbringung eines optisch transparenten Stützkörpers, der flächig in Kontakt mit der Kristallscheibe steht und mit dieser vorzugsweise stoffschlüssig, insbesondere durch ein Diffusionsbondverfahren verbunden ist, werden die Stabilität des Gesamtaufbaus erhöht und ein guter thermischer Kontakt mit dem Kühlelement ermöglicht.

Da zwischen dem Kühlelement und der Kristallscheibe eine Kühlscheibe angeordnet ist, wird die Kristallscheibe vor mechanischer Belastung auf ihrer dem Kühlelement zugewandten Flachseite wirksam geschützt. Darüber hinaus werden insbesondere dann, wenn die Wärmeleitfähigkeit der Kühlscheibe größer ist als die Wärmeleitfähigkeit der Kristallscheibe, der radiale Temperaturverlauf verflacht und die Temperatur in der Mitte der Kristallscheibe verringert.

In einer besonders vorteilhaften Ausführungsform besteht die Kühlscheibe aus Saphir. Dieser Werkstoff hat den Vorteil, dass er bei zugleich hoher Wärmeleitfähigkeit annähernd den gleichen thermischen Ausdehnungskoeffizienten wie eine üblicherweise verwendete Kristallscheibe aus Yb:YAG besitzt.

Vorzugsweise ist die Kühlscheibe wenigstens mittelbar stoffschlüssig, insbesondere durch ein Bondverfahren mit der Kristallscheibe verbunden. Dadurch ist ein guter thermischer Kontakt sichergestellt. Außerdem wird die mechanische und thermische Belastbarkeit der Kristallscheibe erhöht, da die beim Polieren der Kristallscheibe unvermeidlich entstehenden Mikrorisse verschlossen werden, so dass ein Wachstum dieser Risse zumindest vermindert ist, wenn auf die Kristallscheibe mechanische Spannungen wirken. Diese Spannungen entstehen sowohl durch extern auf die Kristallscheibe ausgeübte Kräfte, die durch die Montage des Laserelementes auf dem Kühlelement verursacht sind, als auch durch innere Spannungen, die durch eine thermische Belastung der Kristallscheibe während des Laserbetriebs erzeugt werden. Unter einer wenigstens mittelbaren stoffschlüssigen Verbindung im Sinne der Erfindung ist eine Verbindung zwischen der Kühlscheibe und der Kristallscheibe zu verstehen, bei der diese entweder unmittelbar aneinandergrenzen oder allenfalls durch eine nur wenige µm dicke Zwischenschicht, beispielsweise eine in mehreren dielektrischen Schichten aufgedampfte Spiegelschicht, voneinander getrennt sind.

In einer weiteren vorteilhaften Ausführungsform wirkt das zwischen der von der Kristallscheibe abgewandten Oberfläche des Stützkörpers und einer zwischen der Kristallscheibe und dem Kühlelement angeordneten Spiegelfläche gebildete optische Element als gekrümmter Resonatorspiegel. Dadurch können bei kleinem Aufbau besonders vorteilhafte und an die jeweiligen Bedürfnisse angepasste und optimierte Resonatortypen realisiert werden. Diese Wirkung kann durch eine Krümmung der von der Kristallscheibe abgewandten Oberfläche des Stützkörpers oder durch eine Krümmung der Spiegelfläche oder durch eine Kombination beider Maßnahmen herbeigeführt werden. Da das Laserelement selbst als gekrümmter Resonatorspiegel wirkt, ist außerdem die Verwendung von Resonatortypen möglich, die außerhalb des Laserelementes einen planen Auskoppelspiegel aufweisen. Dies hat den Vorteil, dass der aus dem Resonator austretende Laserstrahl keine zusätzliche Strahlformung erfährt, die durch resonatorexterne Optiken kompensiert werden muss. Außerdem weist der Laserstrahl eine ortsfeste Strahltaille am planen Auskoppelspiegel auf. Dadurch werden die Strahleigenschaften allein durch die Auslegung des Resonators, d. h. die Ausbreitungsbedingungen für den Laserstrahl innerhalb des Resonators bestimmt.

Die Spiegelfläche kann dabei durch eine Spiegelschicht gebildet sein, die unmittelbar auf die dem Stützkörper abgewandte Oberfläche der Kristallscheibe aufgebracht ist. Die entsprechenden Krümmungen der Oberflächen werden dabei nach erfolgtem Bonden der Kristallscheibe und des Stützkörpers durch Schleifen hergestellt.

In einer weiteren bevorzugten Ausführungsform ist die Kühlscheibe optisch transparent und die Spiegelfläche ist durch eine auf der der Kristallscheibe abgewandten Oberfläche der Kühlscheibe angeordnete Spiegelschicht gebildet. Dadurch ist der thermische Kontakt zwischen Kühlscheibe und Kristallscheibe nicht durch Zwischenschichten beeinträchtigt.

In einer vorteilhaften Ausgestaltung ist die von der Kristallscheibe abgewandte Oberfläche der Kühlscheibe konvex gekrümmt, d.h. nach außen gewölbt. Die von der auf dieser Oberfläche aufgebrachten Spiegelschicht gebildete und als Resonatorspiegel dienende Spiegelfläche ist dann konkav gekrümmt und die Resonatoreigenschaften sind verbessert.

In einer vorteilhaften Ausgestaltung ist der Stützkörper ein optisches Funktionselement, insbesondere ein sättigbarer Absorber oder ein Frequenzvervielfacher. Dadurch können zusätzliche Betriebsarten der Laserstrahlquelle verwirklicht werden, ohne dass es hierzu weiterer optischer Komponenten bedarf.

In einer Ausführungsform der Erfindung ist das Kühlelement ein metallischer, vorzugsweise von einem Kühlfluid durchströmter Kühlkörper, der axial mit dem Stützkörper verspannt ist, wobei zwischen dem Kühlkörper und der Kristallscheibe eine duktile Zwischenschicht angeordnet ist. Da der Stützkörper die beim Verspaiznen des Aufbaus auf dem Kühlkörper auftretenden Kräfte am Rand aufnimmt und großflächig auf die Kristallscheibe überträgt, ist gewährleist, dass die Kristallscheibe auf ihrer gesamten Flachseite stets kraftschlüssig am Kühlkörper anliegt. Thermisch induzierte Verformungen sind dann weitgehend vermieden.

Alternativ hierzu ist als Kühlelement eine Kühlkammer vorgesehen ist, die ein Kühlfluid aufnimmt, wobei das Laserelement ein Wandelement der Kühlkammer bildet. Dadurch ist eine besonders effiziente Kühlung gewährleistet.

Die der Kühlkammer zugewandte Oberfläche des Laserelementes ist vorzugsweise mit einer Schutzschicht, beispielsweise Gold (Au) oder Siliziumdioxid (SiO₂), insbesondere Aluminiumoxid (Al₂O₃), versehen. Dadurch ist die Stabilität des Laserelements gegen chemische und mechanische Wirkungen des Kühlfluids erhöht.

In einer weiteren vorteilhaften Ausgestaltung der Erfindung ist die Kristallscheibe axial gepumpt. Durch eine axiale Pumpanordnung wird einerseits die Einkopplung von Pumplicht erleichtert, da dieses an der Flachseite in die Kristallscheibe eintritt. Andererseits ist dadurch auch eine Einbettung der Kristallscheibe in das Kühlelement möglich, bei der diese am seitlichen Rand vollständig umschlossen und somit die Wärmeabfuhr zusätzlich verbessert wird.

Zur weiteren Erläuterung der Erfindung wird auf die Ausführungsbeispiele der Zeichnung verwiesen. Es zeigen:
- Fig.: 1 eine Laserstrahlquelle gemäß der Erfindung in einem schematischen Längsschnitt,
- Fig.: 2 und 3 jeweils alternative Ausgestaltungen der erfindungsgemäßen Laserstrahlquelle ebenfalls in einem Längsschnitt.

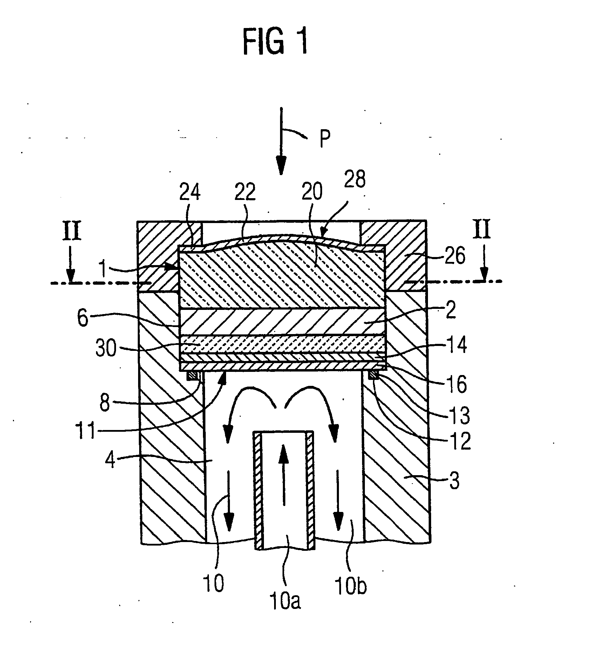

Gemäß Fig. 1 enthält eine Laserstrahlquelle ein Laserelement 1, dessen laseraktives Medium eine dünne Kristallscheibe 2 ist, deren Dicke im Ausführungsbeispiel kleiner als 300µm ist, insbesondere zwischen 100 und 200µm beträgt. Das Laserelement 1 ist in die Wand 3 einer als Kühlelement dienenden Kühlkammer 4 eingesetzt und bildet ein diese begrenzendes Wandelement. Die im Ausführungsbeispiel hohlzylindrische Kühlkammer 4 ist hierzu am Innenumfang mit einer Aussparung 6 versehen, so dass eine ringförmig umlaufende Auflagefläche oder Schulter 8 gebildet wird, auf der das Laserelement 1 aufliegt. Die Aussparung 6 ist im Ausführungsbeispiel so bemessen, dass die Wand 3 über die Kristallscheibe 2 übersteht und diese am seitlichen Rand vollständig umschließt. In der Kühlkammer 4 strömt ein Kühlfluid 10 und kühlt die der Kühlkammer 4 zugewandte Rückseite 11 des Laserelementes 1. Das Kühlfluid 10 tritt aus einem im Inneren der Kühlkammer 4 geführten Zufuhrkanal 10a aus und strömt die Rückseite 11 des Laserelementes 1 unmittelbar an, wird von dieser umgelenkt und in einen den Zufuhrkanal 10a umgebenden Ringkanal 10b abgeführt.

Die Schulter 8 ist mit einer ringförmig umlaufenden Nut 12 versehen, in die ein Dichtring 13 eingesetzt ist, um eine Dichtigkeit der Kühlkammer 4 nach außen sicher zu stellen.

Auf der der Kühlkammer 4 abgewandten Flachseite der Kristallscheibe 2 ist ein optisch transparenter Stützkörper 20 angeordnet, der an seiner von der Kühlkammer 4 abgewandten freien Oberfläche 28 mit einer zumindest für die Wellenlänge des Laserstrahls antireflektierenden Schicht 22 versehen ist. Die Dicke des Stützkörpers 20 ist größer als die Dicke der Kristallscheibe und beträgt im Ausführungsbeispiel etwa 1mm.

Die von der Kristallscheibe 2 abgewandte freie Oberfläche 28 des Stützkörpers 20 ist in einem zentralen Bereich konvex gekrümmt (nach außen gewölbt), so dass das zwischen Stützkörper 20 und einer zwischen Kristallscheibe 2 und Kühlelement befindlichen Spiegelfläche, im Ausführungsbeispiel eine ebene Spiegelschicht 14, gebildete optische Element wie ein konkaver Resonatorspiegel wirkt.

Der konvex gekrümmte zentrale Bereich der Oberfläche 28 wird ringförmig von einer planen Schulter 24 umgeben, auf die ein Spannring 26 aufliegt. Der Spannring 26 wird gegen die Stirnfläche der Wand 3 verspannt, so dass das Laserelement 1 fest gegen die Schulter 8 gepresst wird. Durch die Verwendung eines Spannringes 26 wird die Spannkraft gleichmäßig auf den gesamten Umfang des Stützkörpers 20 verteilt.

Zum Veranschaulichen der Erfindung ist die in der Figur dargestellte Krümmung der freien Oberfläche des Stützkörpers 20 übertrieben dargestellt. Bei großen Krümmungsradien im Meterbereich, wie sie in einer praktischen Ausführungsform Verwendung finden, ist eine plane Schulter 24 als Auflagefläche für den im Längsschnitt L-förmigen Spannring 26 nicht zwingend erforderlich. Eine Kerbwirkung an der Kante des Spannringes 26 kann durch Einlegen eines elastischen O-Ringes oder durch entsprechende Formgebung des Spannringes 26 vermieden werden.

Der Stützkörper 20 kann aus undotiertem YAG bestehen. In diesem Falle ist er optisch "passiv". In besonders vorteilhaften Ausführungsformen übernimmt der Stützkörper 20 eine zusätzliche Funktion und ist beispielsweise ein sättigbarer Absorber, beispielsweise ein mit Chrom (Cr4+) dotierter YAG-Kristall, um einen passiven Q-Switch-Betrieb zu ermöglichen. Alternativ hierzu kann der Stützkörper 20 auch ein Frequenzvervielfacherkristall sein.

Die Kristallscheibe 2 ist auf ihrer vom Stützkörper 20 abgewandten Flachseite mit einer Kühlscheibe 30 versehen, deren Wärmeleitfähigkeit vorzugsweise größer ist als die Wärmeleitfähigkeit der Kristallscheibe 2. Diese Kühlscheibe 30 steht praktisch mit ihrer gesamten von der Kristallscheibe 2 abgewandten Oberfläche in Kontakt mit dem Kühlfluid 10 und bewirkt eine Homogenisierung der radialen Temperaturverteilung der Kristallscheibe 2. Die Dicke der Kühlscheibe 30 entspricht annähernd der Dicke der Kristallscheibe 2, um sowohl eine effiziente seitliche Wärmeabfuhr als auch eine weiterhin gute Kühlung durch das Kühlfluid 10 sicherzustellen. Kristallscheibe 2 und Kühlscheibe 30 sind vorzugsweise ebenso wie der Stützkörper 20 und die Kristallscheibe 2 stoffschlüssig miteinander verbunden. Dies kann beispielsweise durch ein Bondverfahren erfolgen. Alternativ hierzu kann die Kühlscheibe 30 auch durch ein Beschichtungsverfahren, beispielsweise unmittelbares Abscheiden von Kohlenstoff C aus der Gasphase (CVD) auf der Kristallscheibe 2, hergestellt sein. Grundsätzlich ist es auch möglich, Kühlscheibe 30, Kristallscheibe 2 und Stützkörper 20 in einem entsprechend gesteuerten Kristallwachstumsprozess aufeinander aufwachsen zu lassen.

Im Ausführungsbeispiel ist die Kühlscheibe 30 optisch transparent und besteht vorzugsweise aus Saphir. Die Spiegelschicht 14 ist an der von der Kristallscheibe 2 abgewandten Rückseite, d. h. auf der dem Kühlfluid 10 zugewandten Flachseite der Kühlscheibe 30 angeordnet und ist durch eine Schutzschicht 16, beispielsweise aus Gold (Au) oder aus Siliziumdioxid (SiO₂), insbesondere aus Aluminiumoxid (Al₂O₃), vor chemischen und mechanischen Angriffen des Kühlfluids 10 geschützt ist. In diesem Ausführungsbeispiel ist die Kühlscheibe 30 somit resonatorintern angeordnet. Die Dicke der Spiegelschicht 14 und der Schutzschicht 16 ist in der Figur übertrieben dargestellt und beträgt in der Praxis nur wenig µm.

Als Werkstoffe für die Kühlscheibe 30 sind außerdem Diamant oder undotiertes YAG geeignet, wobei ersterer eine hohe Wärmeleitfähigkeit und letzterer denselben thermischen Ausdehnungskoeffizienten wie die üblicherweise aus Yb:YAG bestehende Kristallscheibe 2 besitzt.

Grundsätzlich ist es auch möglich, die zwischen Kristallscheibe 2 und Kühlelement befindliche Spiegelschicht 14 zwischen Kühlscheibe 30 und Kristallscheibe 2 anzuordnen. In diesem Fall ist eine gesonderte Schutzschicht 16 nicht mehr erforderlich.

Darüber hinaus ist insbesondere bei stoffschlüssiger Verbindung der Kristallscheibe 2 mit der Kühlscheibe 30 und mit dem Stützkörper 20 die mechanische Belastbarkeit der Kristallscheibe 2 erhöht, da die durch das Polieren ihrer Flachseiten erzeugten Mikrorisse verschlossen und deren Wachstum bei Ausübung mechanischer Spannungen dementsprechend verhindert ist.

Da die Kühlscheibe 30 ebenfalls sehr dünn und außerdem gut wärmeleitend ist, ist weiterhin eine effiziente Kühlung durch das Kühlfluid sichergestellt.

Im dargestellten Ausführungsbeispiel ist eine axiale Pumpanordnung veranschaulicht, bei der das Pumplicht P auf der der Kristallscheibe 2 abgewandten Oberfläche 28 des Stützkörpers 20 in das Laserelement 1 eingekoppelt wird. Grundsätzlich ist auch eine radiale Pumpanordnung möglich, bei der das Pumplicht P seitlich in die Kristallscheibe 2 eingekoppelt wird. In diesem Fall müssen in der Wand 3 der Kühlkammer 4 Fenster oder Ausnehmungen vorgesehen werden, um eine unmittelbare Einkopplung des Pumplichts P an der Schmalseite der Kristallscheibe 2 zu ermöglichen

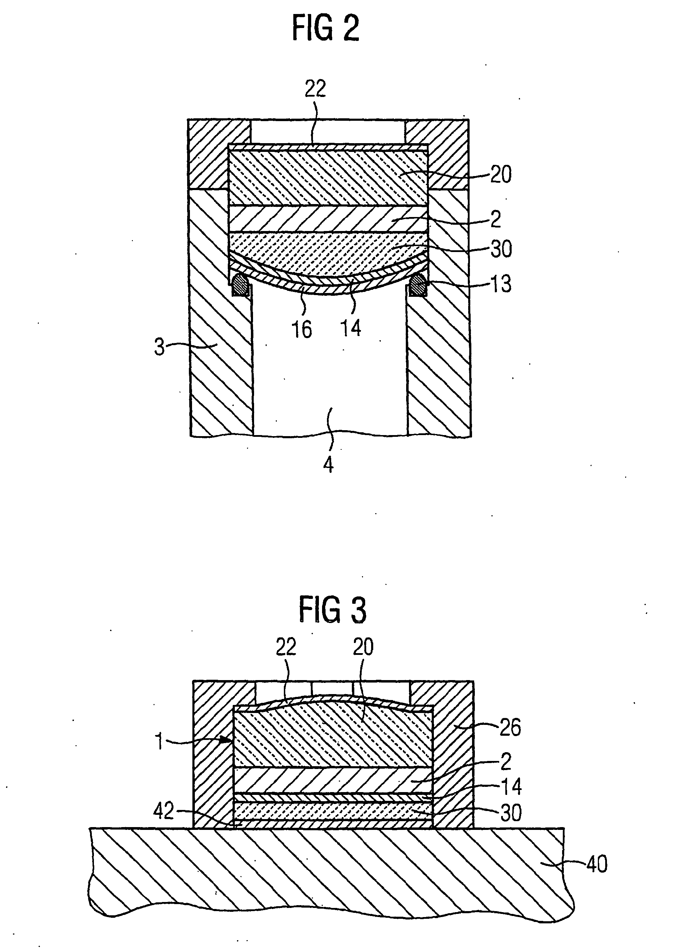

Im Ausführungsbeispiel gemäß Fig. 2 ist die dem Kühlelement zugewandte Flachseite der Kühlscheibe 30 konvex gekrümmt (nach außen gewölbt), so dass die auf dieser Flachseite angeordnete Spiegelschicht 14 für das auf sie auftreffende Laserlicht eine konkave Spiegelfläche bildet. In dieser Figur ist die Krümmung der dem Kühlelement (im Beispiel die Wand 3 und die Kühlkammer 4) zugewandten Flachseite der Kühlscheibe 30 ebenfalls übertrieben dargestellt. In der Praxis beträgt die Änderung der Dicke der Kühlscheibe 30 vom Rand bis zur Mitte nur wenige µm, so dass bei entsprechender Dimensionierung des 0-Ringes 13 eine umlaufende ebene Schulter, wie sie in Fig. 1 beim Stützkörper 20 veranschaulicht ist, nicht erforderlich ist.

Grundsätzlich ist es auch möglich, sowohl die der Kristallscheibe 2 abgewandte Flachseite des Stützkörpers 20 als auch die dem Stützkörper 20 abgewandte Flachseite der Kühlscheibe 30 mit einer konvexen Krümmung versehen.

Gemäß Fig. 3 ist das Laserelement 1 mit dem Spannring 26 auf einem massiven metallischer Körper 40 fixiert, der als Kühlelement dient. Dieser besteht vorzugsweise aus Kupfer (Cu) und ist ebenfalls von einem Kühlfluid durchströmt. Die Kristallscheibe 2 ist über den Stützkörper 20 durch den Spannring 26 fest mit dem Kühlkörper 40 verspannt. Zwischen der Kristallscheibe 2 und dem Kühlkörper 40 ist die Kühlscheibe 30 angeordnet, die über eine duktile Zwischenschicht 42, vorzugsweise aus Indium (In), auf dem Kühlkörper 40 aufliegt. Die Zwischenschicht 42 ermöglicht eine gute Flächenpressung sowie einen guten thermischen Kontakt. Alternativ hierzu kann auch die Kühlscheibe 30 direkt mit dem Kühlkörper 40 verlötet sein. Als Kühlkörper 40 ist auch grundsätzlich ein Peltierelement geeignet.

### Bezugszeichenliste

- 1: Laserelement
- 2: Kristallscheibe
- 3: Wand
- 4: Kühlkammer
- 6: Aussparung
- 8: Schulter
- 10: Kühlfluid
- 10a,b: Zufuhrkanal, Ringkanal
- 11: Rückseite
- 12: Nut
- 13: Dichtring
- 14: Spiegelschicht
- 16: Schutzschicht
- 20: Stützkörper
- 22: antireflektierende Schicht
- 24: Schulter
- 26: Spannring
- 28: Oberfläche
- 30: Kühlscheibe
- 40: Kühlkörper
- 42: Zwischenschicht

- P: Pumplicht

## Patentansprüche

1. Laserstrahlquelle mit einem eine dünne Kristallscheibe (2) als laseraktives Medium enthaltenden Laserelement (1), mit folgenden Merkmalen:
a) die Kristallscheibe (2) steht auf einer ihrer Flachseiten zumindest in einem mittelbaren thermischen Kontakt mit einem Kühlelement (3,4;40),
b) zwischen dem Kühlelement (3,4;40) und der Kristallscheibe (2) ist eine Kühlscheibe (30) angeordnet
c) auf der dem Kühlelement (3,4;40) abgewandten Flachseite der Kristallscheibe (2) ist ein optisch transparenter Stützkörper (20) angeordnet.

2. Laserstrahlquelle nach Anspruch 1, bei der die Kühlscheibe (30) wenigstens mittelbar stoffschlüssig mit der Kristallscheibe (2) verbunden ist.

3. Laserstrahlquelle nach Anspruch 2, bei der die Kühlscheibe (30) wenigstens mittelbar an die Kristallscheibe (2) gebondet ist.

4. Laserstrahlquelle nach Anspruch 2 oder 3, bei der die Kühlscheibe (30) aus Saphir besteht.

5. Laserstrahlquelle nach einem der vorhergehenden Ansprüche, bei der die Kühlscheibe (30) optisch transparent ist.

6. Laserstrahlquelle nach einem der vorhergehenden Ansprüche, bei der zwischen der Kristallscheibe (2) und dem Kühlelement (3,4;40) eine Spiegelfläche angeordnet ist und das zwischen der von der Kristallscheibe (2) abgewandten Oberfläche des Stützkörpers (20) und der Spiegelfläche gebildete optische Element als gekrümmter Resonatorspiegel wirkt.

7. Laserstrahlquelle nach Anspruch 6, bei der die Spiegelfläche durch eine Spiegelschicht (14) gebildet ist, die auf der dem Kühlelement (3, 4, 40) zugewandten Flachseite der Kristallscheibe (2) angeordnet ist.

8. Laserstrahlquelle nach Anspruch 6, bei der die Spiegelfläche (14) auf der der Kristallscheibe (2) abgewandten Oberfläche der Kühlscheibe (30) angeordnet ist.

9. Laserstrahlquelle nach Anspruch 8, bei der die von der Kristallscheibe (2) abgewandte Oberfläche der Kühlscheibe (30) konvex gekrümmt ist.

10. Laserstrahlquelle nach einem der vorhergehenden Ansprüche, bei der der Stützkörper (20) ein sättigbarer Absorber ist.

11. Laserstrahlquelle nach einem der Ansprüche 1 bis 9, bei der der Stützkörper (20) aus einem Frequenzvervielfacherkristall besteht.

12. Laserstrahlquelle nach einem der vorhergehenden Ansprüche, bei der der Stützkörper (20) an die Kristallscheibe (2) gebondet ist.

13. Laserstrahlquelle nach einem der vorhergehenden Ansprüche, bei der das Kühlelement ein metallischer Kühlkörper (40) ist, der axial mit dem Stützkörper (2) verspannt ist.

14. Laserstrahlquelle nach Anspruch 13, bei der auf dem Kühlkörper (40) eine duktile Zwischenschicht (42) angeordnet ist.

15. Laserstrahlquelle nach einem der Ansprüche 1 bis 12, bei der als Kühlelement eine Kühlkammer (4) vorgesehen ist, die ein Kühlfluid (10) aufnimmt, wobei das Laserelement (1) ein Wandelement der Kühlkammer (4) bildet.

16. Laserstrahlquelle nach Anspruch 15, bei der die der Kühlkammer (4) zugewandte Oberfläche des Laserelementes (1) mit einer Schutzschicht (16) versehen ist.

17. Laserstrahlquelle nach Anspruch 16, bei der die Schutzschicht (16) aus Aluminiumoxid (Al₂O₃) besteht.

18. Laserstrahlquelle nach einem der vorhergehenden Ansprüche, bei der die Kristallscheibe (2) axial gepumpt ist.

## Claims

1. Laser beam source with a laser element (1) containing a thin crystal disc (2) as a laser-active medium, with the following features:
a) on one of its flat sides, the crystal disc (2) is at least in indirect thermal contact with a cooling element (3, 4; 40),
b) arranged between the cooling element (3, 4; 40) and the crystal disc (2) is a cooling disc (30),
c) arranged on the flat side of the crystal disc (2) that is facing away from the cooling element (3, 4; 40) is an optically transparent protective body (20).

2. Laser beam source according to Claim 1, in which the cooling disc (30) is integrally connected at least indirectly to the crystal disc (2).

3. Laser beam source according to Claim 2, in which the cooling disc (30) is bonded at least indirectly to the crystal disc (2).

4. Laser beam source according to Claim 2 or 3, in which the cooling disc (30) consists of sapphire.

5. Laser beam source according to one of the preceding claims, in which the cooling disc (30) is optically transparent.

6. Laser beam source according to one of the preceding claims, in which a reflective surface is arranged between the crystal disc (2) and the cooling element (3, 4; 40) and the optical element formed between the surface of the supporting body (20) that is facing away from the crystal disc (2) and the reflective surface acts as a curved resonator mirror.

7. Laser beam source according to Claim 6, in which the reflective surface is formed by a reflective layer (14), which is arranged on the flat side of the crystal disc (2) that is facing the cooling element (3, 4, 40).

8. Laser beam source according to Claim 6, in which the reflective surface (14) is arranged on the surface of the cooling disc (30) that is facing away from the crystal disc (2).

9. Laser beam source according to Claim 8, in which the surface of the cooling disc (30) that is facing away from the crystal disc (2) is convexly curved.

10. Laser beam source according to one of the preceding claims, in which the supporting body (20) is a saturable absorber.

11. Laser beam source according to one of Claims 1 to 9, in which the supporting body (20) comprises a frequency multiplier crystal.

12. Laser beam source according to one of the preceding claims, in which the supporting body (20) is bonded onto the crystal disc (2).

13. Laser beam source according to one of the preceding claims, in which the cooling element is a metallic heat sink (40), which is axially braced with the supporting body (2).

14. Laser beam source according to Claim 13, in which a ductile intermediate layer (42) is arranged on the heat sink (40).

15. Laser beam source according to one of Claims 1 to 12, in which a cooling chamber (4) which receives a cooling fluid (10) is provided as the cooling element, the laser element (1) forming a wall element of the cooling chamber (4).

16. Laser beam source according to Claim 15, in which the surface of the laser element (1) that is facing the cooling chamber (4) is provided with a protective layer (16).

17. Laser beam source according to Claim 16, in which the protective layer (16) consists of aluminium oxide (Al₂O₃).

18. Laser beam source according to one of the preceding claims, in which the crystal disc (2) is axially pumped.

## Revendications

1. Source de rayonnement laser ayant un élément (1) laser contenant un mince disque (2) de cristal comme milieu actif de laser, ayant les caractéristiques suivantes :
a) le disque (2) de cristal est sur l'une de ses faces planes au moins en contact thermique indirect avec un élément (3, 40 ; 40) de refroidissement),
b) un disque (30) de refroidissement est disposé entre l'élément (3, 4 ; 40) de refroidissement et le disque (2) de cristal,
c) un corps (20) d'appui transparent du point de vue optique est disposé sur la face plate, éloignée de l'élément (3, 40 ; 40) de refroidissement, du disque (2) de cristal.

2. Source de rayonnement laser suivant la revendication 1, dans laquelle le disque (30) de refroidissement est relié au moins indirectement à coopération de matière avec le disque (2) de cristal.

3. Source de rayonnement laser suivant la revendication 2, dans laquelle le disque (30) de refroidissement est relié au moins indirectement au disque (2) de cristal.

4. Source de rayonnement laser suivant la revendication 2 ou 3, dans laquelle le disque (30) de refroidissement est en saphir.

5. Source de rayonnement laser suivant l'une des revendications précédentes, dans laquelle le disque (30) de refroidissement est transparent du point de vue optique.

6. Source de rayonnement laser suivant l'une des revendications précédentes, dans laquelle une surface de miroir est disposée entre le disque (2) de cristal et l'élément (3, 4 ; 40) de refroidissement et l'élément optique formé entre la surface, éloignée du disque (2) de cristal, du corps (20) d'appui et la surface de miroir sert de miroir courbé formant résonateur.

7. Source de rayonnement laser suivant la revendication 6, dans laquelle la surface de miroir est formée par une couche (14) de miroir, qui est disposée sur la face plate, tournée vers l'élément (3, 4 ;40) de refroidissement, du disque (2) de cristal.

8. Source de rayonnement laser suivant la revendication 6, dans laquelle la surface (14) de miroir est disposée sur la surface, éloignée du disque (2) de cristal, du disque (30) de refroidissement.

9. Source de rayonnement laser suivant la revendication 8, dans laquelle la surface, éloignée du disque (2) de cristal, du disque (30) de refroidissement est convexe.

10. Source de rayonnement laser suivant l'une des revendications précédentes, dans laquelle le corps (20) d'appui est un absorbeur pouvant être saturé.

11. Source de rayonnement laser suivant l'une des revendications 1 à 9, dans laquelle le corps (20) d'appui est en un cristal multiplicateur de fréquence.

12. Source de rayonnement laser suivant l'une des revendications précédentes, dans laquelle le corps (20) d'appui est lié au disque (2) cristal.

13. Source de rayonnement laser suivant l'une des revendications précédentes, dans laquelle l'élément de refroidissement est un corps (40) de refroidissement métallique qui est bloqué axialement par le corps (2) d'appui.

14. Source de rayonnement laser suivant la revendication 13, dans laquelle une couche (42) intermédiaire ductile est disposée sur le corps (40) de refroidissement.

15. Source de rayonnement laser suivant l'une des revendications 1 à 12, dans laquelle il est prévu comme élément de refroidissement une chambre (4) de refroidissement qui reçoit un fluide (10) de refroidissement, l'élément (1) laser formant un élément de paroi de la chambre (4) de refroidissement.

16. Source de rayonnement laser suivant la revendication 15, dans laquelle la surface, tournée vers la chambre (4) de refroidissement, de l'élément (1) laser est munie d'une couche (16) de protection.

17. Source de rayonnement laser suivant la revendication 16, dans laquelle la couche (16) de protection est en oxyde d'aluminium (Al₂O₃) .

18. Source de rayonnement laser suivant l'une des revendications précédentes, dans laquelle le disque (2) de cristal est pompé axialement.
